Europäisches Patentamt

European Patent Office

Office européen des brevets

(11) Publication number: **0 168 320**
**B1**

(12) **EUROPEAN PATENT SPECIFICATION**

(45) Date of publication of patent specification: **24.01.90**

(21) Application number: **85401361.2**

(22) Date of filing: **04.07.85**

(51) Int. Cl.⁵: **H 02 B 1/015**

(54) **Gas insulated switchgear apparatus.**

(30) Priority: **13.07.84 JP 145455/84**

(43) Date of publication of application:
**15.01.86 Bulletin 86/03**

(45) Publication of the grant of the patent:
**24.01.90 Bulletin 90/04**

(84) Designated Contracting States:
**AT BE CH DE FR GB IT LI NL SE**

(56) References cited:
**EP-A-0 008 817**
**EP-A-0 008 821**
**DE-A-2 628 453**
**FR-A-2 346 884**

(73) Proprietor: **MERLIN GERIN**
**Rue Henri Tarze**
**F-38050 Grenoble Cédex (FR)**

(72) Inventor: **Shimoda, Sumio**
**Nissin Electric Co, Ltd. 47, Umezu-Takase-cho**
**Ukyo-ku Kyoto-shi Kyoto Pref. (JP)**
Inventor: **Tanimura, Kenichi**
**Nissin Electric Co, Ltd. 47, Umezu-Takase-cho**
**Ukyo-ku Kyoto-shi Kyoto Pref. (JP)**
Inventor: **Sunagawa, Shunichi**
**Nissin Electric Co, Ltd. 47, Umezu-Takase-cho**
**Ukyo-ku Kyoto-shi Kyoto Pref. (JP)**

(74) Representative: **Kern, Paul et al**
**Merlin Gerin Sce. Brevets 20, rue Henri Tarze**
**F-38050 Grenoble Cédex (FR)**

Courier Press, Leamington Spa, England.

## Description

The invention relates to a gas insulated switchgear apparatus comprising a container filled with insulating gas and containing a line disconnector including a pair of contact members, one of which being electrically connected to a circuit breaker, and the other to the line, said container comprising an opening provided in a wall opposite to said line disconnector, for mounting a test voltage device.

Recently, the gas insulation switching apparatus to be installed in a substation or the like has been noted, which is of construction such that a plurality of apparatus constituting a switching circuit are housed in a container filled with insulating gas (usually SF6 gas) of relatively low pressure. Such construction is far simpler than that of a type of housing each apparatus in a separate metal casing and the casings are connected with each other through insulating spacers, and also miniaturized to save the installation space. Furthermore, it can be designed to simplify the appearance of apparatus and to harmonize with environment.

This kind of apparatus must be subjected to the withstand voltage test for cables connecting apparatus and switches arranged in the containers. Since the apparatus, such as circuit breakers and disconnectors, housed in the container are designed to be insulated from AC voltage, it is not preferable to apply DC test voltage to these apparatuses. Hence, the withstand voltage test for the apparatus, such as circuit breakers, housed in the casing should be applied with AC voltage. On the other hand, when the cable connected to the switching apparatus is longer, its capacitance is larger, so that if the withstand voltage test for the cable is intended to be carried out under AC voltage, the capacity of test equipment becomes remarkably larger, which is not practicable. Hence, the withstand voltage test for the cable uses AC voltage when the cable is short, but DC voltage should be used when the same is long.

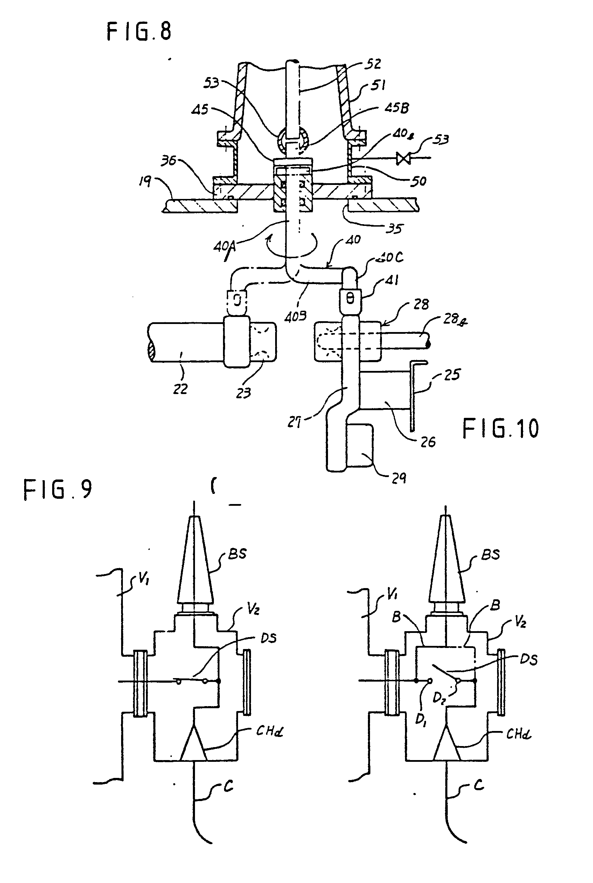

For example, as shown in Fig. 9, a gas insulation switching apparatus of the prior art, which connects a container V1 housing therein apparatus, such as a circuit breaker, a disconnector, a grounding device and a current transformer, necessary for forming the switching circuit and a container V2 housing therein cable heads CHd and a line disconnector DS, is subjected to the test as follows: In detail, when the cable constituting the line is smaller in length, the container V2, after withdrawing gas therefrom, opens a bushing mounting opening to mount on the container V2 a test voltage applying bushing BS and then gas is recharged in the container V2. Thereafter, the disconnector DS is closed and the cable heads CHd are connected to the apparatus (the circuit breaker, disconnector, grounding device or the like) in the container V1, so that, in such condition, AC test voltage is applied through a bushing BS to the cable C connecting the apparatus in the container V1 and cable heads CHd.

In a case where the cable of the line is longer, the container V2, after withdrawing gas therefrom, opens the bushing mounting opening at the container V2 and a test voltage applying bushing BS is mounted on the container V2 to thereby connect a conductor B in connection with the bushing as shown by the solid line in Fig. 10 to a stationary electrode D1 at the disconnector DS. Thereafter, gas is recharged in the container V2 and AC test voltage is applied to the apparatus in the container V1 to carry out the withstand voltage test on the apparatus therein. Next, the gas is taken out from the container V2, the conductor B is reconnected to a movable electrode D2 at the disconnector DS as shown by the chain line, and the gas is recharged into the container V2. Thereafter, in condition of opening the disconnector DS, the bushing BS applies DC test voltage to the cable C through the cable heads CHd.

In document DE—A—2.628.453, the voltage test device includes an auxiliary test container housing a high voltage test conductor which is electrically connected to a bushing, at which is applied the test voltage. The test container has a flange which is secured for each test operation, to a corresponding flange of the case including the tested metal clad switching apparatus. The test container is then tightly assembled to the case, so as to be in communication with each other.

Thus, it is necessary for the conventional gas insulating switching apparatus to withdraw the gas in the container, or recharge the gas therein. Especially, when the cable is larger in length, the gas treatment and gas recharge are required to be repeated several times, thereby creating the defect that work is very troublesome.

An object of the invention is to provide a gas insulation switching apparatus capable of making a test without taking out the gas from the container.

Means for solving the problem

This invention has been so designed that a gas insulation switching apparatus, which houses in a container filled with insulating gas a line disconnector and apparatus necessary to constitute a switching circuit including a circuit breaker connected to the line through the line disconnector, can make a withstand voltage test without withdrawing gas from the container.

According to the present invention, said opening is airtight closed by an insulating spacer through which extends a test voltage applying movable electrode having a contact arranged at one end, said electrode being rotatably and slidably supported upon the insulating spacer, so as to be actuated from the exterior of the container for shifting to a position close to the line disconnector, and rotating between a first position where said contact is electrically connectable to said one contact member of said line disconnector and a second position where said contact is electrically connectable to said other contact member of said line disconnector.

In the above-mentioned construction, the contact at the test voltage applying movable electrode and the movable side electrode or the stationary side electrode may electrically be connected with each other by allowing the contact to contact directly with the movable side electrode or the stationary side electrode at the line disconnector, or by allowing the contact to contact with a conductor connected with the movable or stationary electrode at the line disconnector. Also, a test voltage applying stationary electrode in contact with the test voltage applying movable electrode may be provided at the movable side electrode or stationary side electrode at the line disconnector, the conductor connected to the movable side electrode, or the connector connected to the stationary side electrode at the line disconnector.

In the aforesaid construction, the apparatus housed in the container include a circuit breaker, a disconnector, a grounding device, an instrument transformer and a current transformer. These apparatus may be housed in a batch into a common container, or the particular apparatus may be housed in another container separately from other apparatus. The present invention is applicable to any gas insulation switching apparatus above-mentioned.

In the above-mentioned construction, when the apparatus is operated, the test voltage applying movable electrode is disposed apart from the line disconnector. In a case of carrying out the withstand voltage test on apparatus to be tested other than the cable, the test voltage applying movable electrode is controlled from the exterior of the container so as to shift to the position close to the line disconnector and rotate to electrically connect the contact to one of the movable side electrode and stationary side electrode (one electrode connected to the apparatus to be tested) at the line disconnector. Hence, the test voltage applying movable electrode is electrically connected to the apparatus, such as circuit breaker, to be tested and the line disconnector is open to connect the test voltage applying movable electrode to a test AC power source, whereby the apparatus to be tested is applied with AC test voltage and put to the withstand voltage test. Also, in a case of making the withstand voltage test to the cable, the movable electrode is rotated to connect its contact electrically with the other of the movable electrode and stationary electrode (the other electrode connected to the cable head) at the line disconnector and the line disconnector is kept open so as to connect the test voltage applying movable electrode to a test DC power source, whereby the cable is applied with DC test voltage and put to the withstand voltage test. In a case where the cable and other apparatus to be tested are simultaneously applied with AC voltage to make the withstand voltage test to both, the contact of the test voltage applying movable electrode is connected electrically to either the movable side electrode or the stationary side electrode at the line disconnector so that the test AC power source is connected to the test voltage applying movable electrode in condition of closing the line disconnector.

## Preferred Embodiment

Next, explanation will be given on an embodiment of the invention with reference to the accompanying drawings.

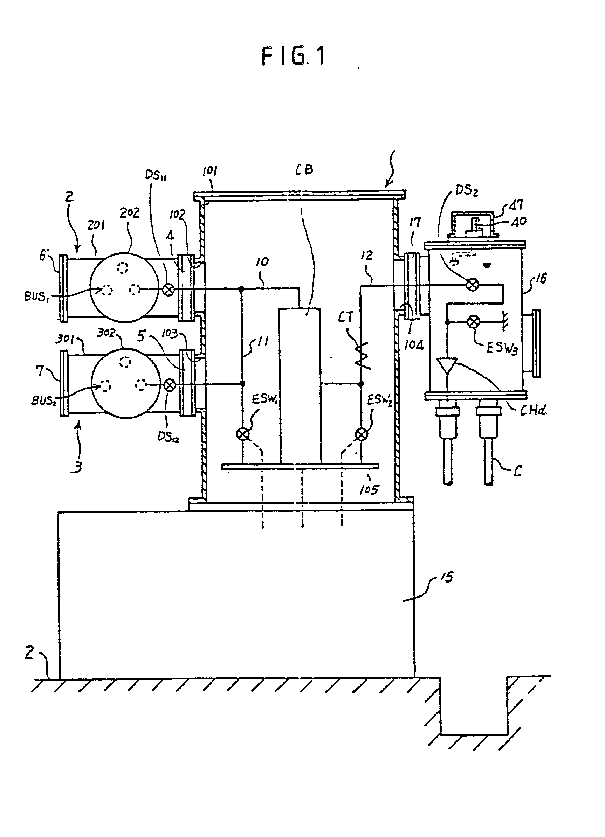

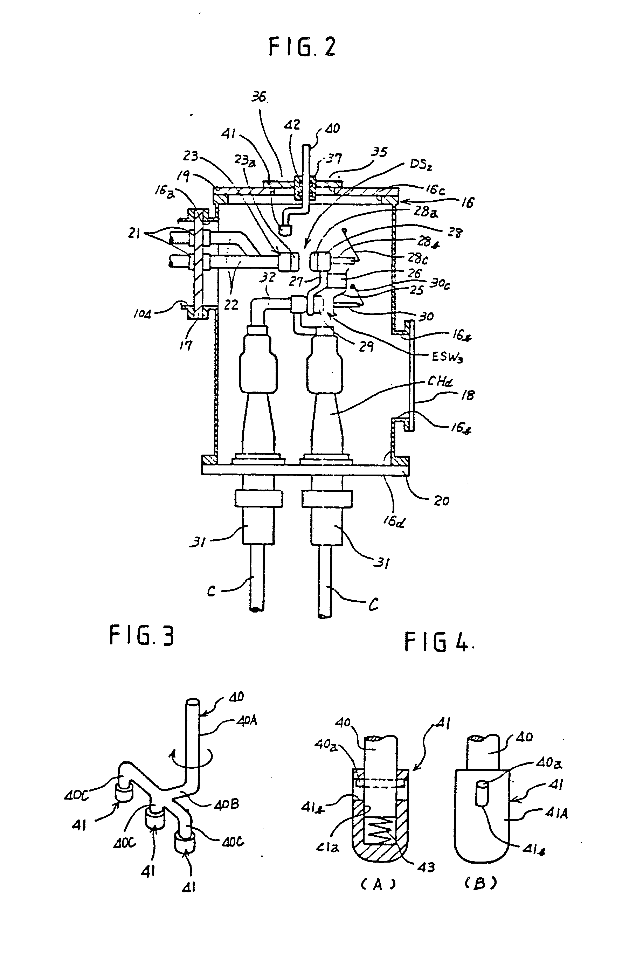

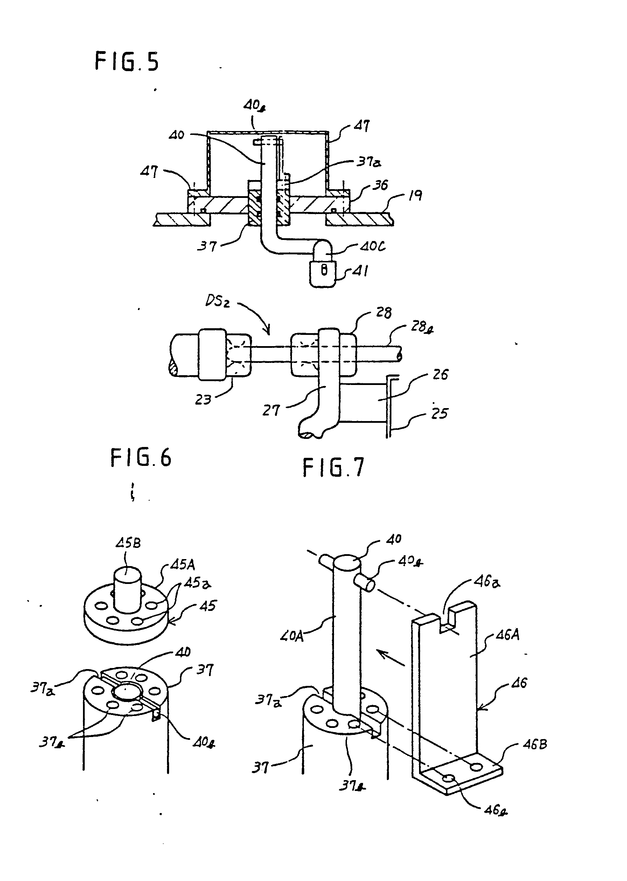

Fig. 1 is a structural view showing a container partially in section and one-line diagram of electrical construction of apparatus housed in the container, Fig. 2 is a sectional view of a cable head unit, Fig. 3 a perspective schematic view of a movable electrode, Figs. 4-(A) and -(B) are a sectional view and a front view showing a contact portion, Fig. 5 is a sectional view of the principal portion of a test voltage applying movable electrode, Fig. 6 is a perspective view of mounting construction of a first adapter with respect to a support conductor, Fig. 7 is a perspective view showing mounting construction of a second adapter with respect to the support conductor, Fig. 8 is a sectional view of the principal portion in condition of connecting a test voltage applying bushing to the test voltage applying movable electrode, and Figs. 9 and 10 are views explanatory of the conventional apparatus in condition of putting thereto the withstand voltage test.

In Fig. 1, arrangement of a container is schematically shown and electrical construction of each apparatus housed in the container is shown by a one-line diagram. In Fig. 1, 1 is a main container of elongate cylindrical shape, which is installed on a base and controller box 15 provided on an installation base 2 and directed vertically in the axis. The main container 1 is provided at the upper end portion with an opening 101 for mounting a circuit breaker, at the front side of a trunk with first and second bus unit connecting openings 102 and 103 directed perpendicularly to the opening 101, and at the front side with a cable head unit connecting opening 104. First and second bus containers 2 and 3 are connected to the first and second unit connecting openings 102 and 103 at the main container 1. The bus containers 2 and 3 each are constructed in cross-pipe type with first pipes 201 and 301 and second pipes 202 and 302 extending perpendicularly to the first pipes respectively, the first pipes 201 and 301 being connected at one ends to the first and second bus unit connecting openings 102 and 103 through insulating spacers 4 and 5 respectively, and closed at the other ends with lids 6 and 7 respectively. Within the second pipes 202 and 302 at the first and second bus containers 2 and 3 are housed 3-phase conductors constituting first and second buses BUS1 and BUS2, the 3-phase conductors being supported to insulating spacers mounted on the pipes 202 and 302 to close both ends of pipes 202 and 302 respectively. In the first pipes 201 and 301 at the first bus containers 2 and 3 are housed first and second 3-phase bus side disconnectors DS11 and DS12 respectively, the disconnectors being connected at one ends to conductors of phase corresponding to the buses BUS1 and BUS2 respectively. The first bus container 2, first bus BUS1 and first bus side disconnector DS11, constitute a first bus unit and the second bus container 3, second bus BUS2 and second bus side disconnector DS12, constitute a second bus unit.

In the main container 1 are housed a circuit breaker CB, grounding devices ESW1 and ESW2 for inspecting the circuit breakers, and current transformers CT in three phases respectively, the circuit breaker CB being provided vertically in the main container 1, circuit breakers in the respective phases being mounted, for example, on the lower ends on a support plate 105. The circuit breaker CB is connected at one end to the first bus side disconnector DS11 at the other end thereof through a conductor 10 and also to the other end of the second bus side disconnector DS12 through the conductors 10 and 11. The grounding device ESW1 is provided between the conductor 11 and a grounding potential unit, the grounding device ESW2 is provided between the conductor 12 connected to the other end of circuit breaker CB and the grounding potential unit, the grounding devices ESW1 and ESW2 being supported on, for example, the support plate 105. In the controller box 15 disposed below the main container 1 are housed controllers for the circuit breaker CB and grounding devices ESW1 and ESW2 and instruments for monitoring, the controllers in the controller box being connected with the predetermined apparatus in the main container 1 through connection mechanisms (not shown), such as a linkage mechanism.

A cable head container 16 is connected through an insulating spacer to the cable head unit connecting opening 104 at the rear side of main container 1 and a line side disconnector DS2, and in the main container 16 are housed line disconnectors DS2, line side grounding instruments ESW3, line side grounding device ESW3, and cable heads CHd, for 3-phases. As detailed in Fig. 2, the container 16 has a main container connecting opening 16a at the upper side surface in front of the cylindrical container directed vertically in the axis, the opening 16a being connected to the opening 104 at the main container 1 through the insulating spacer. Also, the container 16 has on the lower side surface at the rear side an opening 16b for working, the opening 16b being closed by a lid 18. At the upper and lower ends of container 16 are provided openings 16c and 16d respectively, the openings 16c and 16d being closed by a lid 19 and a bottom plate 20. Embedded conductors 21 perforating the insulating spacer 17 are provided and a conductor 12 in continuation of the circuit breaker CB is connected to the end of embedded conductor 21 at the main container 1 side. A connecting conductor 22 is connected at one end to the end of embedded conductor 21 at the cable head container 16 side and a stationary electrode 23 at the disconnector DS2 is connected to the other end of the connecting conductor, the stationary side electrode 23, as well known, disposing a tulip contact in a shield 23a. A conductor 27 is supported through an insulating support 26 to a frame 25 supported to the container 16 through a moderate means, the conductor 27 connecting at its one end to a movable side electrode 28 at the disconnector DS2 opposite to the stationary electrode 23. The movable side electrode 28 comprises a current collecting electrode disposed in a shield 28a and a rod-like electrode 28b supported slidably to the current collecting electrode, the rod-like electrode 28b being adapted to be driven by an operating mechanism 28c linearly in the direction of moving toward and away from the stationary electrode. The operating mechanism 28c is connected at its operating shaft to a controller in the controller box (not shown) so that the controller operates the rod-like electrode 28b to move toward and away from the stationary electrode. The stationary electrode 23 and movable electrode 28 are positioned downwardly by a predetermined distance from the upper opening 16c at the container 16 and opposite to each other in the axial direction of the insulating spacer 17.

To the other end of the conductor 27 supported to the frame 25 is connected a stationary electrode 29 at a grounding device ESW3, the frame 25 supporting by a moderate means a rod-like movable electrode 30 constituting together with the stationary electrode 29 the grounding device ESW3. The movable electrode 30 is adapted to be driven linearly by the operating mechanism 30c to move toward and away from the stationary electrode 29, the operating shaft at the operating mechanism 30c being connected to the controller (not shown) and operated thereby to move the movable electrode toward and away from the stationary electrode.

The cable heads CHd are mounted downwardly on the bottom plate 20, and connectors 31 attached to the ends of cables C are connected to the cable heads CHd through openings (not shown) formed at the bottom plate 20, the cable heads CHd being connected at the terminals to the conductor 27 through conductors 32 respectively. An opening 35 is provided at the center of lid 19 for the container 16 and an insulating spacer 36 is mounted to close the opening 35. A support conductor 37 airtight-perforating the insulating spacer 36 is provided and a test voltage applying movable electrode 40 perforates slidably and rotatably through the support conductor 37 and is supported thereto. The movable electrode 40, as shown in Fig. 3, comprises a rotatary shaft 40A extending vertically and supported rotatably and slidably to a through bore provided at the support conductor 37, a turning arm 40B bent horizontally perpendicularly from the lower end of the rotary shaft 40A, and three branches 40C projecting downwardly from the arm 40B, which are integral with each other, the three branches 40C having at the lower ends contacts 41 respectively. Between the rotary shaft 40A at the movable electrode 40 and the inner surface of the through bore at the support conductor 37 are interposed packings 42, thereby keeping airtight the perforating portion of movable electrode 40. The movable electrode 40 is provided to be slidable between the position close to the disconnector DS2 and that apart from the same at a predetermined interval and also be rotatable between the first and second positions so that the movable electrode 40, when turned to the first position, is pushed inwardly to enable the three contacts 41 to be brought into contact with the movable electrodes 28 at the 3-phases disconnector DS2. In condition of turning the movable electrode 40 to the second position, the movable electrode 40 is pushed in to thereby enable the three contacts 41 to be brought into contact with the stationary electrodes 23 at the 3-phase disconnector DS2 respectively. In this embodiment, when the movable electrode 40 rotates to the first position, the contacts 41 contact with the movable electrodes 28 at the disconnector DS2 and when the same rotates to the second position, the contacts 41 are adapted to be contactable with the stationary electrodes 23. Alternatively, the contacts 41 may be brought into contact with the conductors connected to the movable electrodes and stationary electrodes at the disconnector DS2. Also, the movable electrodes and stationary electrodes at the disconnector DS2 may be connected with stationary electrodes to be in contact with the contacts 41.

Each contact 41 in this embodiment, as shown in Figs. 4-(A) and -(B), comprises a contact member 41A having a bore 41a into which the utmost end of movable electrode 40 is slidably fitted and elongate slots 41b, a pin 40a attached to the utmost end of movable electrode 40 is fitted into the slots 41b to thereby regulate displacement of the contact member 41A. A compression spring 43 is interposed between the bottom of bore 41a at the contact member 41A and the utmost end of movable electrode 40.

As shown in Figs. 5 through 7, on the upper end of rotary shaft 40A at the movable electrode 40 is mounted a pin 40b extending perpendicularly to the axis of rotary shaft and at the upper end of support conductor 37 is provided a groove 37a into which the pin 40b is to be fitted. At the upper end of support conductor 37 are provided a plurality of threaded bores open upwardly and spaced circumferentially at the predetermined intervals so that in condition of pushing the rotary shaft 40A at the movable electrode 40 is pushed and of fitting the pin 40b into the groove 37a as shown in Fig. 6, a first adapter 45 formed of conductive material abuts against the upper end face of support conductor 37 to thereby fix the adapter thereto, whereby the contacts 41 at the movable electrode 40 can be locked in proximity to the disconnector DS2. The first adapter 45 comprises a disc-like holder 45A and a terminal conductor 45B projecting upwardly from the center of the holder 45A, the holder 45A being provided with bolt insertion bores 45a engageable with the threaded bores 37b at the support conductor 37 so that a bolt screws with the threaded bore 37b at the support conductor 37 through the bolt insertion bore 45a, thereby fixing the first adapter 45 to the support conductor 37. The rotary shaft 40A at the movable electrode 40 is rotated at an angle of 180° to change orientation of pin and set the pin 40b and groove 37a in position with respect to the contacts 41 so that the contacts 41 at the electrode 40 is adapted to be selectively positioned in the first position where they contact with the movable electrode 28 at the disconnector DS2 and the second position where the same contacts with the stationary electrode 23 at the disconnector DS2. Thus, in condition of fitting the pin 40b into the groove 37a and fixing the first adapter 45, the contacts 41 are adapted to contact with either the movable electrode 28 or stationary electrode 23 at the disconnector DS2. In this condition, a terminal electrode 45B at the first adapter, as discussed below, connects to the test power source through a test voltage applying bushing, so that test voltage can be applied to the cable C connected to the movable electrode at the disconnector DS2, or the apparatus to be tested and connected to the stationary electrode at the same.

As shown in Fig. 7, the rotary shaft 40A at the movable electrode 40 is drawn out and a second adapter 46 is mounted thereon, so that the contacts 41 at the movable electrode 40, as shown in Fig. 5, can be held in the position spaced from the disconnector DS2 at a predetermined distance. The second adapter 46 in this embodiment is formed of a band plate bent in a L-like shape to form a shaft supporting portion 46A and a fixing portion 46B, the shaft supporting portion 46A being provided at the utmost end with a groove 46a into which the pin 40b provided at the end of the movable electrode is to be fitted, the fixing portion 46B being provided with bores 46b to align with the threaded bores 37b at the support conductor 37 respectively. In condition of fitting the pin 40b into the groove 46a, bolts passing through the bores 46b screw with the threaded bores 37b to thereby fix the second adapter 46 to the support conductor 37. Thus, the contacts 41 at the movable electrode, in condition of mounting the second adapter 46 on the support conductor 37, are held apart from the disconnector DS2, as shown in Fig. 5, so that the movable electrode 4 is adapted not to affect the normal operation of the gas insulation switching apparatus. When the gas insulation switching apparatus is operated normally, a protective cover 47, as shown in Fig. 5, is attached to the insulating spacer 36 to cover the end of movable electrode 40, to which the second adapter 46 is attached.

In the aforesaid embodiment, the main container 1, bus containers 2 and 3, cable head container 16 and protective cover 47 of course are formed to be airtight and filled therein with SF6 gas under the predetermined pressure.

In the above embodiment, in a case of making the withstand voltage test on the gas insulating switching apparatus, the gas in the protective cover 47 is withdrawn therefrom to remove the cover 47 and the second adapter 46 is removed. Next, the orientation of pin 40b is selected to push in the movable electrode 40, thereby allowing the contacts 41 thereof to contact with, for example, the movable electrode 28 at the disconnector DS2. Then, the first adapter 45 is mounted on the support conductor 37 and a tubular base 50 is mounted on the insulating spacer 36. A test voltage applying bushing 51 is mounted on the tubular base 50 and a central conductor 52 of bushing 51 is connected to the terminal electrode 45B at the first adapter 45 through a tulip contact 53. Next, a valve 53 connected to the tubular base 50 is open to charge the SF6 gas into the bushing 51, through which the test DC voltage is applied to the cable heads C.

Next, in a case of putting to the withstand voltage test apparatus other than the cable heads, housed in the main container 1, the gas is withdrawn from the interior of the bushing 51, which is once removed, and the first adapter 45 is removed. Next, the movable electrode 40 is drawn to turn the pin 40b at an angle of 180° and thereafter the movable electrode 40 is pushed in to allow the contacts 41 to contact with the stationary electrodes 23 at the disconnector DS2. Then, the first adapter 45 is remounted on the support conductor, the bushing 51 is mounted on the container 16, SF6 gas is charged in the bushing, and thereafter the test AC voltage is applied from the test power source to the apparatus in the main container 1 through the bushing.

After the test is over, the bushing 51 and tubular base 50 are removed and the movable electrode 40 is drawn so that the second adapter 46 holds the movable electrode apart from the disconnector DS2. Next, the protective cover 47 is mounted to be filled therein with SF6 gas.

In the aforesaid embodiment, the movable electrode 28 at the line disconnector DS2 is connected to the cable heads CHd and the stationary electrode 23 to the apparatus in the main container, but the movable and stationary electrodes may of course be replaced each other.

In the above-mentioned embodiment, the movable electrode 40 held apart from the disconnector DS2 when the gas insulation switching apparatus is normally operated may be usable as a voltage detecting electrode. In other words, a well-known voltage detection apparatus is connected to the movable electrode 40 to utilize capacitance between the movable electrode and the disconnector DS2, thereby enabling detection of voltage existing in the main circuit charged portion connected to the disconnector DS2.

Also, in the aforesaid embodiment, the cable head container 16 is provided to house therein the cable heads and line disconnector, but the present invention is applicable to the case where the cable heads and line disconnector are housed in the main container.

The apparatus constituting the switching apparatus of the invention is not limited to the aforesaid embodiment, but of course other apparatus are at need provided, or useless apparatus are removable.

In the above-mentioned embodiment, the test voltage is applied by use of the bushing and also the present invention is applicable to the case where the cable is used to apply the test voltage.

## Claims

1. A gas insulated switchgear apparatus comprising a container (16) filled with insulating gas and containing a line disconnector (DS2) including a pair of contact members (23, 28), one (23) of which being electrically connected to a circuit braker (CB), and the other (28) to the line (C), said container (16) comprising an opening (16C) provided in a wall opposite to said line disconnector, for mounting a test voltage device, characterized in that said opening (16C) is airtight closed by an insulating spacer (19) through which extends a test voltage applying movable electrode (40) having a contact (41) arranged at one end, said electrode being rotatably and slidably supported upon the insulating spacer (19), so as to be actuated from the exterior of the container (16) for shifting to a postion close to the line disconnector (DS2), and rotating between a first position where said contact (41) is electrically connectable to said one contact member (23) of said line disconnector and a second position where said contact is electrically connectable to said other contact member (28) of said line disconnector.

2. A gas insulated switchgear apparatus, according to claim 1, characterized in that said test movable electrode (40) includes a rotatable shaft (40a) extending through a bore provided in the insulating spacer (19) and that the outer end of said rotatable shaft (40a) located outside of the container (16) comprises first latching means (37a, 40b) for securing said shaft respectively in said first and second positions.

3. A gas insulated switchgear apparatus, according to claim 2, characterized in that said outer end of the shaft (40a) further comprises second latching means (46a, 40b) for securing said shaft (40a) in a position away from the line disconnector (DS2).

4. A gas insulated switchgear apparatus, according to claim 2 or 3, characterized in that it comprises a removable airtight protective cover (47) for covering said outer end of the shaft (40a).

5. A gas insulated switchgear apparatus, according to claim 1, 2, 3 or 4, characterized in that said container (16) contains a three phase line disconnector (DS2) and that said test voltage applying electrode (40) has three contacts (41) for electrically connecting the test electrode (40) to the contact members of the three phases of the line disconnector (DS2).

## Patentansprüche

1. Gasisoliertes Schaltgerät mit einem Gehäuse (16), das mit Isoliergas gefüllt ist und einen Leitungs-Trennschalter (DS2) aufweist, der ein Paar Kontaktglieder (23, 28) enthält, von denen das eine (23) elektrisch mit dem Leistungsschalter (CB) und das andere (28) mit der Leitung (C) verbunden ist, wobei das genannte Gehäuse (16) eine Öffnung (16C) aufweist, die in der dem genannten Leitungs-Trennschalter gegenüberliegenden Wand vorgesehen ist, zur Montage einer Teststromspannungsvorrichtung, dadurch gekennzeichnet, dass die genannte Öffnung (16C) luftdicht von einem Isoliersteg (19) geschlossen wird, durch den sich eine die Teststromspannung anwendende bewegliche Elektrode (40) erstreckt, mit einem an einem Ende angebrachten Kontakt (41), wobei die genannte Elektrode drehbar und gleitbar auf dem Isoliersteg (19) angebracht ist, so dass sie von ausserhalb des Gehäuses (16) betätigt werden kann, um in eine Stellung nahe des Leitungs-Trennschalters (DS2) zu gleiten, und zwischen einer ersten Stellung, in welcher der genannte Kontakt (41) elektrisch mit dem genannten einem Kontaktglied (23) des genannten Trennschalters verbunden werden kann, und einer zweiten Stellung, in welcher der genannte Kontakt (41) mit dem genannten anderen Kontaktglied (28) des genannten Trennschalters verbunden werden kann, zu drehen.

2. Gasisoliertes Schaltegerät, gemäss Anspruch 1, dadurch gekennzeichnet, dass die genannte bewegliche Test-Elektrode (40) eine drehbare Welle (40a) aufweist, die sich durch ein in dem Isoliersteg (19) vorgesehenes Loch erstreckt, und dass das äussere Ende der genannten drehbaren Welle (40a), das ausserhalb des Gehäuses (16) gelegen ist, erste Verriegelungsmittel (37a, 40b) aufweist um die genannte Welle in der genannten ersten bzw. zweiten Stellung zu blockieren.

3. Gasisoliertes Schaltegerät, gemäss Anspruch 2, dadurch gekennzeichnet, dass das genannte äussere Ende der Welle (40a) ausserdem zweite Verriegelungsmittel (46a, 40b) aufweist, um die genannte Welle (40a) in einer Stellung entfernt von dem Leitungs-Trennschalter (DS2) zu blockieren.

4. Gasisoliertes Schaltegerät, gemäss Anspruch 2 oder 3, dadurch gekennzeichnet, dass es einen abnehmbaren, luftdichten Schutzdeckel (47) aufweist, um das genannte äussere Ende der Welle (40a) zu bedecken.

5. Gasisoliertes Schaltgerät, gemäss Anspruch 1, 2, 3 oder 4, dadurch gekennzeichnet, dass das genannte Gehäuse (16) einen dreiphasigen Leitungs-Trennschalter (DS2) aufweist, und dass die genannte, eine Teststromspannung anwendende Elektrode (40) drei Kontakte (41) aufweist, um die Test-Elektrode (40) elektrisch mit den Kontaktgliedern der drei Phasen des Leitungs-Trennschalters (DS2) zu verbinden.

## Revendications

1. Appareil de commutation à isolation gazeuse comprenant un compartiment (16) rempli de gaz isolant et contenant un sectionneur de ligne (DS2) ayant une paire d'éléments de contact (23, 28) dont l'un (23) est connecté électriquement à un interrupteur (CB) et l'autre (28) à la ligne (C), ledit compartiment (16) comprenant une ouverture (16C) agencée dans la paroi opposée audit sectionneur de ligne, pour le montage d'un dispositif de tension test, caractérisé en ce que ladite ouverture (16C) est fermée de façon étanche à l'air par une entretoise isolante (19) à travers laquelle s'étend une électrode mobile (40) appliquant une tension test et ayant un contact (41) disposé à une extrémité, ladite électrode étant montée à pivotement et à coulissement sur l'entretoise isolante (19), de façon à être actionnée de l'extérieur du compartiment (16) pour se déplacer dans une position près du sectionneur de ligne (DS2) et pivotant entre une première position, dans laquelle ledit contact (41) peut être connecté électriquement à l'un desdits éléments de contact (23) dudit sectionneur de ligne, et une deuxième position dans laquelle ledit contact peut être connecté électriquement à l'autre desdits éléments de contact (28) du sectionneur de ligne.

2. Appareil de commutation à isolation gazeuse selon la revendication 1, caractérisé en ce que ladite électrode mobile test (40) comprend un arbre rotatif (40a) s'étendant à travers une perforation prévue dans l'entretoise isolante (19) et en ce que l'extrémité externe dudit arbre rotatif (40a), située à l'extérieur du compartiment (16) comprend un premier moyen d'accrochage (37a, 40b) pour verrouiller ledit arbre respectivement dans les première et deuxième positions.

3. Appareil de commutation à isolation gazeuse selon la revendication 2, caractérisé en ce que ladite extrémité externe de l'arbre (40a) comprend en plus un deuxième moyen d'accrochage (46a, 40b) pour verrouiller ledit arbre (40a) dans une position éloignée du sectionneur de ligne (DS2).

4. Appareil de commutation à isolation gazeuse selon la revendication 2 ou 3, caractérisé en ce qu'il comprend un couvercle de protection amovible étanche à l'air (47) pour couvrir ladite extrémité externe de l'arbre (40a).

5. Appareil de commutation à isolation gazeuse selon la revendication 1, 2, 3 ou 4, caractérisé en ce que ledit compartiment (16) comprend un sectionneur de ligne triphasé (DS2) et en ce que ladite électrode (40) appliquant une tension test comporte trois contacts (41) pour connecter électriquement l'électrode test (40) aux éléments de contact des trois phases du connecteur de ligne (DS2).

# FIG.1

FIG. 2

FIG. 3

FIG 4.

(A)    (B)

FIG.5

FIG.6

FIG.7

FIG.8

FIG.10

FIG.9